# EUROPEAN PATENT SPECIFICATION

(11) **EP 2 526 354 B1**
(45) Date of publication and mention of the grant of the patent: **13.09.2017**
(21) Application number: 11734389.7
(22) Date of filing: 19.01.2011
(51) Int. Cl.: F25B 45/00, B60H 1/00

(54) **A SYSTEM AND A METHOD FOR THE FLUSHING OF AIR CONDITION SYSTEMS**
SYSTEM UND VERFAHREN ZUM SPÜLEN VON KLIMAANLAGENSYSTEMEN
SYSTÈME ET PROCÉDÉ DE RINÇAGE DE SYSTÈMES DE CLIMATISATION

(30) Priority: 22.01.2010 DK 201000048
(43) Date of publication of application: 28.11.2012
(73) Proprietor: MAHLE International GmbH, 70376 Stuttgart (DE)
(72) Inventor: CORDING, Louis, DK-6400 Sønderborg (DK)
(74) Representative: BRP Renaud & Partner mbB Rechtsanwälte Patentanwälte Steuerberater
(86) International application number: PCT/DK2011/000002
(87) International publication number: WO 2011/088831

(56) References cited:
- DE-A1- 4 331 769
- DE-A1- 10 018 430
- GB-A- 2 404 970
- JP-A- 2004 333 090
- US-A- 5 806 328
- US-A- 6 134 896

## Description

The present invention relates to a system for performing service and flushing of air conditioning systems, especially mobile air conditioning systems in vehicles, such as cars and trucks, etc.

Additionally, the present invention relates to a method of flushing such air conditioning systems.

### Prior art

Today, air conditioning systems (A/C systems), e.g. in vehicles such as cars, buses or trucks, etc. contain coolants which are not inflammable. The coolants are added during the manufacture of the vehicle, and the A/C systems in the vehicles are serviced and repaired from time to time. Equipment for performing this is known. US 6 134 896 shows such an equipment and a method according to the preamble of claim 1. The most commonly used coolant at present is 1,1,1,2-tetrafluoroethane, which is commonly known as R134a. However, owing to the high green house effect (GWP, Global Warming Potential) of R134a, it is not allowed to use R134a as a coolant in new vehicles after 1 January 2011.

A substitute coolant having a permissible low GWP value has been developed, which, unfortunately, is inflammable. The service stations used for the filling, emptying and flushing of the new inflammable coolant must therefore fulfil the ATEX Directive 94/9/EU concerning equipment and protective systems intended for use in potentially explosive atmospheres or inflammable atmospheres. This EU directive, in short ATEX, implies that the service station used for the filling and emptying of A/C systems, especially mobile A/C systems in vehicles, must comply with considerable technical requirements when the inflammable coolant is to be added to the A/C system, or when service is performed on the A/C systems containing the inflammable coolant.

In accordance with ATEX, a zone 2 is classified as an area in which, normally, no inflammable atmosphere is present - only in case of an accident, and then only briefly. Zone 2 is the lowest area classification according to ATEX.

A component which contains an inflammable medium and also has a connection or a gasket, which is not technically tight, is considered to have a zone 2 in a radius of 1 m around the connection or gasket. A gasket is normally tight, but may become leaky because of wear and/or ageing. Therefore, according to ATEX, a zone 2 atmosphere will by definition be present around the gasket.

When maintenance is performed on A/C systems, the coolant is evacuated from the A/C system prior to service or repair. The evacuation is normally performed by suction.

When performing service and/or repair on A/C systems operating on an inflammable coolant, the service systems must therefore be suitable for use in a zone 2 environment according to ATEX. In other words, zone 2 requirements should be fulfilled at least inside the service station.

In those cases where the A/C system includes components which are to be replaced, there is a procedure where the oil and/or particulates content in the component itself, or in the entire air conditioning system, has to be flushed out by means of a so-called flushing process. So far, so-called flushing kits have been used for this, said kits being supplied to the service stations as "add-ons" for mounting between the A/C system and the service station during the flushing process. With the prior art technology, as mentioned, the flushing kit is mounted between the mobile A/C system and the service station. The primary purpose of this flushing kit is to catch all the coolant which is flushed through the A/C system from the service station in liquid form, as well as the oil and any solids or particulates which are entrained by the flushing flow of the coolant. After collection, it is then the task of the service station to empty the coolant from the accumulator of the flushing kit in gas form, thereby leaving the oil in the accumulator. Prior art service stations for mobile for A/C systems usually contain their own suction accumulator, a heated suction accumulator, which basically has the same function as these flushing accumulators in the flushing kits- they are just smaller, since they are not intended to receive any large amounts of coolant and also just smaller amounts of oil when a normal service is carried out on a mobile A/C system, i.e. when the A/C system is only to be emptied.

Since, however, the new coolant is inflammable, this flushing kit will have to comply with the special requirements in ATEX, which also apply to the service station, since a zone 2 will be present around every connection, i.e. also around the connections between the external flushing kit and the service station.

In accordance with the international standard IEC/EN60079-15 regarding electrical equipment for use in explosive or inflammable atmospheres, the inflammable area, e.g. a zone 2 area, may be shielded from the environment and the zone 2 area may be subjected to ventilation.

The object of the invention is to provide a system which may be used for the filling, emptying and especially flushing of A/C systems, such as mobile A/C systems, which system may be used during service and/or maintenance of A/C systems containing inflammable coolants.

Another object of the invention is to provide a simplified system which may be used for for filling, emptying and especially flushing of A/C systems, which eliminates the need for the flushing kit, including the externally mounted flushing accumulator. Still another object of the invention is to provide a system in which also a suction accumulator present in the coolant circuit in the service station may be eliminated.

An object of the invention is also to provide a method for flushing of A/C systems, especially a method for A/C systems operating on inflammable coolants. Additionally, an object of the invention is to provide a method of flushing A/C systems which is less time consuming, and which eliminates decrease in the capacity of the compressor during the flushing process.

### Summary of the invention

The above mentioned objects are achieved by a method of flushing air conditioning systems as disclosed in claim 1, which may be used for flushing air conditioning systems in vehicles or similar mobile air conditioning systems, which are operating on an inflammable coolant, comprising the steps of flushing the coolant in liquid form from an internal cylinder in a service station through the air conditioning system, extracting a mixture of gaseous coolant and oil and/or particulates, which have been flushed from the air conditioning system, and passing the mixture to a heated flushing accumulator mounted inside the service station, separating the oil and/or particulates from the coolant in the heated flushing accumulator by the compressor sucking gaseous coolant from the heated flushing accumulator, condensing the coolant by cooling, and transferring the liquefied coolant to the internal cylinder. The method enables a less time consuming flushing procedure and enables the flushing of A/C systems, which are operating on an inflammable coolant.

As disclosed in claim 2, it is expedient that the liquid coolant enters the air conditioning system through a service port connected to the liquid side of the air conditioning system and leaves the air conditioning system in gaseous form, including any entrained oil and/or particulates, through a service port on the gas side of the air conditioning system. According to the invention the coolant is cooled in a heating coil mounted in the heated flushing accumulator, which simultaneously heats the mixture of coolant, oil and/or particulates present in the heated flushing accumulator.

Other expedient embodiments of the method are disclosed in claims 3-6 in which the method may further comprise emptying oil and/or particulates from the heated flushing accumulator.

The object of the invention is also achieved by a system for the filling, emptying and flushing of air conditioning systems as disclosed in claim 7 which is useful for flushing air conditioning systems in vehicles or similar mobile air conditioning systems, which are operating on an inflammable coolant, and which comprises a service station, intended to be coupled to the air conditioning system during a filling, emptying and/or flushing procedure, wherein the service station comprises a cabinet in which a pipeline for transporting the coolant connects an first port with a compressor, cooling means, and an internal cylinder for storing the coolant as well as a second port, and wherein a heated flushing accumulator is arranged inside the service station and between the first port and the compressor in order to catch the coolant, which is flushed from the service station and through the A/C system, and to heat the coolant present in the heated flushing accumulator and simultaneously to cool the coolant in the heating coil for condensing the hot, gaseous or partially liquefied coolant prior to storage in the internal cylinder.

According to the present invention, the externally mounted flushing and the internal suction accumulator used in the prior art service station may be omitted, as their function will be taken over by the heated flushing accumulator. Since the externally mounted flushing kit is omitted the gaskets and/ or connections between related to the flushing kit are avoided. This results in fewer zones 2 areas outside the service station and the new system is thus fulfilling ATEX requirements. Additionally, when the external flushing kit does not have to be mounted between the service station and the MAC, handling time is moreover saved - i.e. the actual flushing process is faster and easier. The simplified construction of the service station and the elimination of the external flushing kit also result in a simplified system which is less expensive to produce.

As disclosed in claim 9 the heated flushing accumulator preferably comprises a heating coil through which gaseous coolant, which has been heated in the compressor, is intended to flow. The heating coil uses waste heat present in the gaseous coolant and counter acts the cooling effect, and the resulting reduction in the capacity of the compressor which would occur when the compressor sucks a cooled gaseous coolant from the prior art externally mounted flushing accumulator.

As disclosed in claim 8, the cabinet of the service station is preferably gas tight and as disclosed in claim 10, it is expedient that the heated flushing accumulator further comprises a valve mounted on an outlet through which oil and/or particulates are withdrawn from the heated flushing accumulator. It is preferred that the pipe line comprises valves which are mounted between an outlet on the internal cylinder and the second port, as disclosed in claim 11 while other expedient embodiments are disclosed in claims 12-15.

### Detailed description

The invention will be explained in the following with reference to the drawing in which
- fig. 1: shows a diagram of a prior art service station for the filling, emptying and /or flushing of mobile A/C systems operating on R134a, and
- fig. 2: shows a diagram of the inventive new service station for the filling, emptying and /or flushing of mobile A/C systems operating on an inflammable coolant.

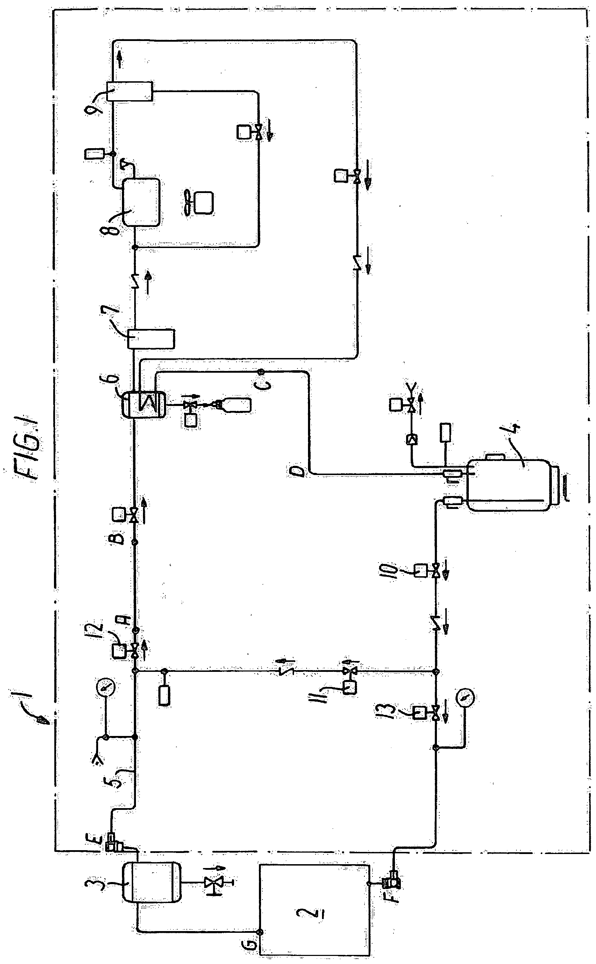

The prior art technology, a service station 1 for the filling, emptying and/or flushing of A/C systems, especially mobile A/C systems (called MAC in the following) 2 is shown in figure 1. When using the prior art service station (see fig. 1) for performing a normal service on the MAC 2, the external flushing accumulator 3, as shown in fig. 1, is not mounted between the port G on the MAC 2 and the port E on the service station. The coolant is initially withdrawn from the MAC 2 and into the internal cylinder 4. The coolant is sucked into the service station 1 through the port E, which is connected the port G on the MAC by a pipe or hose (not shown). The gaseous coolant is sucked through the service station pipe line 5 and through a heated suction accumulator 6, which will be discussed later, and into the compressor 8, optionally via a filter 7. The gaseous coolant is compressed in the compressor 8, which results in a heated gaseous, or a heated and partially condensed coolant, which is transferred to the internal cylinder 4 via an oil separator 9 and cooling means for the condensation of the coolant prior to storage in the internal cylinder 4. When all the coolant has been withdrawn from the MAC 2, a normal service may be performed.

Prior art service stations normally contain a suction accumulator 6, which basically has the same function as the external flushing accumulators 3. The suction accumulator 6 is, however, a small internal accumulator, since it is not intended to receive large amounts of coolant and just small amounts of oil and particulates, which enter the service station 1 from the MAC 2 during a normal service, i.e. when the MAC 2 is just to be emptied.

When the normal service is completed the MAC 2 is filled with liquid coolant through the port E. Filling is initiated by opening the valves 10 and 11 and closing the valve 12. When filling is completed, the service station is detached from the MAC 2.

When the prior art service station is used for flushing of the MAC 2, a flushing kit comprising an external flushing accumulator 3 is mounted between the MAC 2, and a port E on the service station. The liquid coolant which is stored in the internal cylinder 4 is flushed through the MAC 2 from the port F connected to the liquid side of the MAC 2 and exits the MAC 2 at the port G, normally in gaseous state.

The coolant then enters the external flushing accumulator 3 together with oil and particulates or solids, which are flushed from the MAC 2 by the circulating coolant.

The primary purpose of the externally mounted flushing accumulator 3 in the flushing kit is to catch all the coolant which is flushed through the MAC from the service station as well as the oil and/or any particulates or solids, which are entrained by the coolant flowing through the MAC 2. After collection, it is then the task of the service station to empty the coolant from the accumulator of the flushing accumulator 3 in gaseous form, thereby leaving the oil and any solids or particulates in the flushing accumulator 3.

Since the actual flushing primarily comprises flushing a large amount of liquid coolant from the internal cylinder 4, via open valves 10 and 13 and via the service coupling F through the MAC 2 itself (or the individual component which is to be flushed) and into the flushing accumulator 3, a significant part of the time used in the flushing process is spent on the compressor 8 evacuating the coolant from the flushing accumulator 3 in gaseous form. In some situations, the coolant extracted from the external flushing accumulator 3 is not entirely in gaseous form, i.e. certain amounts of liquid coolant are extracted along with the gaseous phase and sucked into the service station 1. When the compressor 8 sucks out gaseous coolant from the flushing accumulator 3, the coolant is cooled strongly, whereby the pressure in the flushing accumulator 3 decreases. A decreasing pressure also results in a decreasing density, which in turn results in a lower capacity of the compressor 8, i.e. the mass flow drops, and, thereby, the overall time it takes to empty the flushing accumulator 3 increases.

During the flushing procedure, the suction accumulator 6 acts as a cooling means in order to condense the hot, gaseous or partially liquefied coolant prior to storage in the internal cylinder 4 by heat exchange with the cooled gaseous coolant sucked through the suction accumulator 6 by the compressor 8. There is no significant accumulation of oil and/or particulates in the suction accumulator 6 during the flushing procedure, since the most of the oil and/or particulates, which are flushed out of the MAC 2, is collected in the external flushing accumulator 3.

If partially condensed coolant is sucked from the external flushing accumulator 3 during the flushing period, it may be collected in the internal heated suction accumulator 6 and evaporated, partly by being heated by a heating coil in the heated suction accumulator 6, and partly due to the compressor 8 sucking gas from the heated suction accumulator 6.

The oil and/or solids may be extracted from the flushing accumulator 3 when the flushing sequence is completed and the flushing accumulator 3 has been detached from the service station 1.

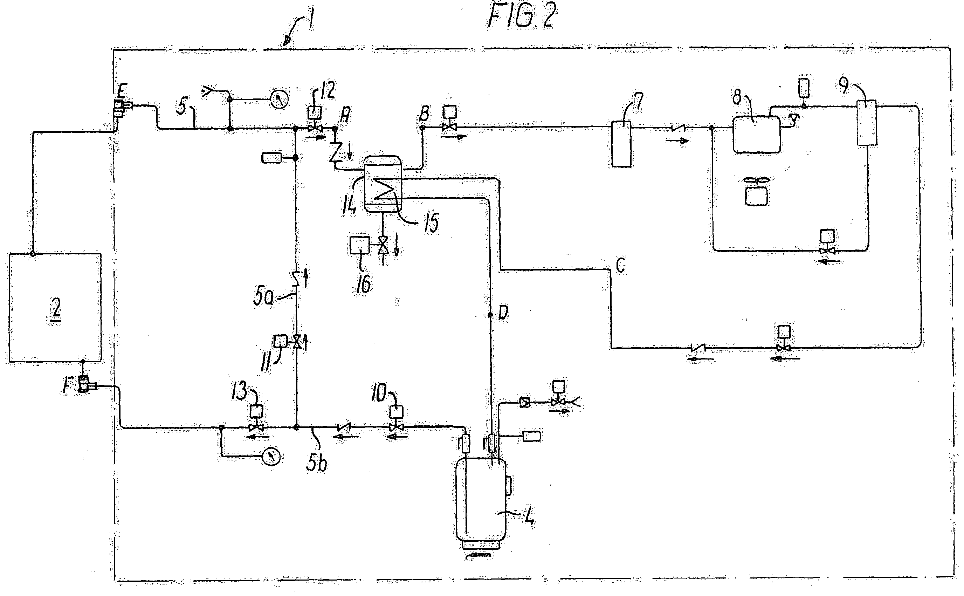

An improved version of the prior art service station is shown in fig. 2, in which the system according to the invention is shown in a diagram. Features which are also present in the prior art (fig. 1), are presented using identical reference signs and should not need further explanation.

In the present invention, a flushing accumulator 14 is mounted between the points A and B, which are present inside the service station 1, instead of being mounted externally.

When the flushing accumulator 14 is mounted inside the service station, it is possible to use the waste heat for heating the flushing accumulator 14 via the connection points C + D (fig. 1), where the hot compressed gaseous coolant from the compressor 8 is used for heating the mixture in the flushing accumulator 14 in a heating coil 15 mounted in the flushing accumulator 14 and thus forming a heated flushing accumulator 14. The hot compressed gaseous, or partially liquefied coolant is cooled and condensed in the heating coil 15 prior to storage as a liquid coolant in the internal cylinder 4. Therefore, the mixture in the flushing accumulator 14 is used for cooling the coolant in the heating coil 15. Thereby, the internally mounted heated flushing accumulator 14 serves a dual function as it acts to catch the coolant, which is flushed through the A/C system from the service station in liquid form, as well as the oil and any solids or particulates which are entrained by the flushing flow of the coolant and also acts in cooling the coolant in the heating coil 15 for condensing the hot, gaseous or partially liquefied coolant prior to storage in the internal cylinder 4. In addition, when the service station 1 is used for recovering coolant during the normal service procedure, the internally mounted heated flushing accumulator 14 also acts to catch oil and/or particulates which escapes from the MAC 2 during coolant recovery.

Similarly to the externally mounted flushing accumulator 3, the compressor sucks out gaseous coolant from the heated flushing accumulator 14, by which the coolant is cooled strongly, whereby the pressure in the heated flushing accumulator 14 decreases.

When the waste heat present in the compressed gaseous coolant leaving the compressor 8, is utilized for heating the coolant/oil/particulates mixture by passing the hot gaseous coolant through the heating coil 15 in the heated flushing accumulator 14, the cooling of the mixture present in the heated flushing accumulator 14, which occurs in the prior art using externally mounted flushing accumulators, may be counteracted, and the full capacity of the compressor may thus be maintained. Therefore, the flushing process will be much faster than the prior art flushing process because the cooling of the coolant in the heating coil (15) and simultaneously the heating of the mixture of coolant, oil and/or particulates present in the heated flushing accumulator 14 is performed in the same flushing accumulator 14.

Oil and/or particulates are preferably withdrawn from the heated flushing accumulator 14 either during the emptying or the flushing procedures by opening a valve 16, e.g. in a fixed and predetermined time interval.

The inside of the service station contains gaskets and connections between the pipe line 5 and the components and is therefore per definition zone 2 area according to ATEX. In order to fulfil zone 2 requirements, the cabinet of the service station 1 according to the invention has a gas-tight cabinet, which is preferably ventilated. Since no external gaskets or connections are present, because the externally mounted flushing kit is eliminated, there is no zone 2 outside the service station, except for the area around the couplings between the service station 1 and the MAC 2, i.e. points F and G, when it is used for performing filling, emptying and/or flushing during service or repair on a MAC 2 comprising an inflammable coolant.

According to the present invention, the suction accumulator 6 used in the prior art service station 1 may also be omitted, as its function will be taken over by the heated flushing accumulator 14. Additionally, when the external flushing kit does not have to be mounted between the service station and the MAC, handling is moreover saved - i.e. the actual flushing process is faster and easier. The simplified construction of the service station and the elimination of the external flushing kit also result in a simplified system which is less expensive to produce.

The present invention also relates to a method of flushing A/C systems, especially mobile A/C systems operating on an inflammable cooling agent. Initially, the service station is coupled to the MAC 2. A service port E is connected to the gaseous side of the MAC 2, and a service port F is connected to the liquid side of the MAC 2. Flushing is performed by opening valves 10 and 13 and closing valve 11, following which liquid coolant flows from the internal cylinder 4 and enters the air conditioning system via pipe line 5b and through the service port F connected to the liquid side of the MAC 2. The coolant circulates through the MAC 2 and captures any oil and/or particulates and leaves the MAC 2 in gaseous form, including any entrained oil and/or particulates, through the service port E. The compressor 8 sucks the mixture of coolant and oil and/or particulates into a heated flushing accumulator 14 mounted inside the service station 1. Oil and/or particulates are separated from the coolant in the heated flushing accumulator 14 due to the compressor 8 sucking gaseous coolant from the heated flushing accumulator 14. When the gaseous coolant is compressed in the compressor 8, it is also heated. The waste heat transferred to the gaseous coolant in the compressor 8 is used for heating the mixture in the heated flushing accumulator 14 by passing the heated gaseous coolant through the heating coil 15. While heating the mixture in the heated flushing accumulator, the hot gaseous coolant is cooled sufficiently in the heating coil 15 in order to condense, which enables storage of the coolant in liquid form in the internal cylinder 4.

Oil and/or particulates are withdrawn from the heated flushing accumulator 14 in an emptying procedure, which is carried out during the flushing procedure.

The oil and/or particulates are emptied from the heated flushing accumulator 14 through the valve 16 using a timer to control the opening and closing of the valve 16.

Oil which may have been transferred to the circulating coolant by its passage through the compressor 8, is preferably removed in the oil separator 9 prior to cooling in the heating coil 15.

## Claims

1. A method for flushing of air conditioning systems, such as air conditioning systems in vehicles or similar mobile air conditioning systems, comprising the steps of
a) flushing the coolant in liquid form from an internal cylinder in a service station (1) through the air conditioning system (2),
b) extracting a mixture of gaseous coolant and oil and/or particulates, which has been flushed from the air conditioning system and passing the mixture to a heated flushing accumulator (14) mounted inside the service station (1),
c) separating the oil and/or particulates from the coolant in the heated flushing accumulator (14) by the compressor (8) sucking gaseous coolant from the heated flushing accumulator (14),
d) condensing the coolant by cooling, and
e) transferring the liquefied coolant to the internal cylinder (4)
**characterized in that** the air conditioning systems operates on an inflammable coolant and the method further comprising cooling the coolant in a heating coil (15) mounted in the heated flushing accumulator (14) and simultaneously heating the mixture of coolant, oil and/or particulates present in the heated flushing accumulator (14).

2. A method according to claim 1, **characterized in that** the liquid coolant enters the air conditioning system through a service port (F) connected to the liquid side of the air conditioning system (2) and leaves the air conditioning system (2) in gaseous form, including any entrained oil and/or particulates, through a service port (E) on the gas side of the air conditioning system (2).

3. A method according to claim 1 or 2, **characterized by** further comprising the step of emptying oil and/or particulates from the heated flushing accumulator (14).

4. A method according to claim 3, **characterized in,** the step of emptying oil and/or particulates from the heated flushing accumulator (14) is performed during the flushing procedure.

5. A method according to any one of claims 3 to 4, **characterized by** emptying oil and/or particulates from the heated flushing accumulator (14) through valve a (16) using a timer to control the opening and closing of the valve (16).

6. A method according to any of the preceding claims, **characterized by** further comprising separating any oil transferred to the circulating coolant by its passage through the compressor (8) prior to cooling in the heating coil (15).

7. A system for filling, emptying and flushing of air conditioning systems, such as air conditioning systems in vehicles or similar mobile air conditioning systems, which operates on an inflammable coolant, which
comprises a service station intended to be coupled to the air conditioning system during a filling, emptying and/or flushing procedure, wherein the service station (1) comprises a cabinet in which a pipeline (5) for transporting the coolant connects a first port (E) with a compressor (8), cooling means and an internal cylinder (4) for storing the coolant as well as a second port (F), and wherein a heated flushing accumulator (14) is arranged inside the service station (1) between the first port (E) and the compressor (8) in order to catch the coolant, which is flushed from the service station (1) and through the AIC system (2), and to heat the coolant present in the heated flushing accumulator (14) and simultaneously to cool the coolant in the heating coil (15) for condensing the hot, gaseous or partially liquefied coolant prior to storage in the internal cylinder (4).

8. A system according to claim 7, **characterized in that** the cabinet is gastight.

9. A system according to claim 7 or 8, **characterized in that** the heated flushing accumulator (14) comprises a heating coil (15) through which gaseous coolant, which has been heated in the compressor (8), is intended to flow.

10. A system according to any of the claims 7-9, **characterized in that** the heated flushing accumulator (14) further comprises a valve (16) mounted on an outlet through which oil and/or particulates are withdrawn from the heated flushing accumulator (14).

11. A system according to claim 7, **characterized in that** the pipeline (5b) comprises valves (1 0, 13), which are mounted between an outlet on the internal cylinder (4) and the second port (F).

12. A system according to claim 11, **characterized in that** a valve (12) is mounted between the first port (E) and the heated flushing accumulator (14).

13. A system according to claim 11 or 12, **characterized in that** the outlet from the internal cylinder (4) is connected to the first port (E) via a branch (5a) of the pipe line, which branch (5a) includes a valve (11).

14. A system according to any of the claims 7-13, **characterized in that** an oil separator (9) is mounted between the compressor (8) and the heating coil (15).

15. A system according to any of claims 7-14, **characterized in that** a filter (7) is mounted between the heated flushing accumulator (14) and the compressor (8).

## Patentansprüche

1. Verfahren zum Spülen von Klimaanlagen wie Klimaanlagen in Fahrzeugen oder ähnlichen mobilen Klimaanlagen, umfassend folgende Schritte:
a) Ausspülen des Kühlmittels in flüssiger Form aus einem internen Zylinder in einer Servicestation (1) durch die Klimaanlage (2),
b) Extrahieren einer Mischung von gasförmigem Kühlmittel und Öl und bzw. oder Feststoffen, die aus der Klimaanlage ausgespült worden ist, und Transportieren der Mischung zu einem erhitzten Spülakkumulator (14), der im Inneren der Servicestation (1) montiert ist,
c) Trennen des Öls und bzw. oder der Feststoffe vom Kühlmittel im erhitzten Spülakkumulator (14) durch den Kompressor (8), der das gasförmige Kühlmittel aus dem erhitzten Spülakkumulator (14) absaugt,
d) Kondensieren des Kühlmittels durch Kühlen und
e) Übertragen des verflüssigten Kühlmittels auf den internen Zylinder (4),
**dadurch gekennzeichnet, dass** die Klimaanlage mit einem brennbaren Kühlmittel arbeitet, und das Verfahren ferner das Kühlen des Kühlmittels in einer Heizschlange (15), die im erhitzten Spülakkumulator (14) montiert ist, und gleichzeitiges Erhitzen der Mischung von Kühlmittel, Öl und bzw. oder Feststoffen umfasst, die im erhitzten Spülakkumulator (14) vorhanden sind.

2. Verfahren nach Anspruch 1, **dadurch gekennzeichnet, dass** das flüssige Kühlmittel durch einen Serviceport (F), der an die Flüssigkeitsseite der Klimaanlage (2) angeschlossen ist, in die Klimaanlage eintritt und die Klimaanlage (2) durch einen Serviceport (E) auf der Gasseite der Klimaanlage (2), einschließlich allem mitgerissenen Öl und bzw. oder aller mitgerissenen Feststoffe, in gasförmiger Form verlässt.

3. Verfahren nach Anspruch 1 oder 2, **dadurch gekennzeichnet, dass** es ferner den Schritt des Leerens von Öl und bzw. oder Feststoffen aus dem erhitzten Spülakkumulator (14) umfasst.

4. Verfahren nach Anspruch 3, **dadurch gekennzeichnet, dass** der Schritt des Leerens von Öl und bzw. oder Feststoffen aus dem erhitzten Spülakkumulator (14) während der Spülprozedur durchgeführt wird.

5. Verfahren nach einem der Ansprüche 3 bis 4, **dadurch gekennzeichnet, dass** das Leeren von Öl und bzw. oder Feststoffen aus dem erhitzten Spülakkumulator (14) durch ein Ventil (16) ausgeführt wird, wobei ein Zeitgeber zum Steuern von Öffnen und Schließen des Ventils (16) verwendet wird.

6. Verfahren nach einem der vorhergehenden Ansprüche, **dadurch gekennzeichnet, dass** es ferner das Abtrennen von allem Öl umfasst, das auf das umlaufende Kühlmittel durch seinen Durchgang durch den Kompressor (8) vor Kühlen in der Heizschlange (15) übertragen worden ist.

7. System zum Füllen, Leeren und Spülen von Klimaanlagen wie zum Beispiel Klimaanlagen in Fahrzeugen oder ähnlichen mobilen Klimaanlagen, die mit einem brennbaren Kühlmittel arbeiten, das eine Servicestation umfasst, die an die Klimaanlage während einer Füll-, Entleer- und bzw. oder Spülprozedur anzukoppeln ist, wobei die Servicestation (1) einen Schrank umfasst, in dem eine Rohrleitung (5) für den Transport des Kühlmittels einen ersten Port (E) mit einem Kompressor (8), Kühlvorrichtung und einem internen Zylinder (4) zum Speichern des Kühlmittels sowie einem zweiten Port (F) verbindet, und wobei ein erhitzter Spülakkumulator (14) im Inneren der Servicestation (1) zwischen dem ersten Port (E) und dem Kompressor (8) angeordnet ist, um das Kühlmittel aufzufangen, das aus der Servicestation (1) und durch die Klimaanlage (2) gespült wird, und das im erhitzten Spülakkumulator (14) vorhandene Kühlmittel zu erhitzen und gleichzeitig das Kühlmittel in der Heizschlange (15) zu kühlen, um das heiße, gasförmige oder teilweise verflüssigte Kühlmittel vor Speichern im internen Zylinder (4) zu kondensieren.

8. System nach Anspruch 7, **dadurch gekennzeichnet, dass** der Schrank gasdicht ist.

9. System nach Anspruch 7 oder 8, **dadurch gekennzeichnet, dass** der erhitzte, Spülakkumulator (14) eine Heizschlange (15) umfasst, durch die gasförmiges Kühlmittel, das im Kompressor (8) erhitzt worden ist, fließen soll.

10. System nach einem der Ansprüche 7 bis 9, **dadurch gekennzeichnet, dass** der erhitzte Spülakkumulator (14) ferner ein Ventil (16) umfasst, das an einem Auslass montiert ist, durch den Öl und bzw. oder Feststoffe dem erhitzten Spülakkumulator (14) entnommen werden.

11. System nach Anspruch 7, **dadurch gekennzeichnet, dass** die Rohrleitung (5b) Ventile (10, 13) umfasst, die zwischen einem Auslass am internen Zylinder (4) und dem zweiten Port (F) montiert sind.

12. System nach Anspruch 11, **dadurch gekennzeichnet, dass** ein Ventil (12) zwischen dem ersten Anschluss (E) und dem erhitzten Spülakkumulator (14) montiert ist.

13. System nach Anspruch 11 oder 12, **dadurch gekennzeichnet, dass** der Auslass vom internen Zylinder (4) an den ersten Port (E) über einen Ast (5a) der Rohrleitung angeschlossen ist, wobei dieser Ast (5a) ein Ventil (11) aufweist.

14. System nach einem der Ansprüche 7 bis 13, **dadurch gekennzeichnet, dass** ein Ölabscheider (9) zwischen dem Kompressor (8) und der Heizschlange (15) montiert ist.

15. System nach einem der Ansprüche 7 bis 14, **dadurch gekennzeichnet, dass** ein Filter (7) zwischen dem erhitzten Spülakkumulator (14) und dem Kompressor (8) montiert ist.

## Revendications

1. Procédé pour rincer des systèmes de climatisation, tels que des systèmes de climatisation dans des véhicules ou des systèmes de climatisation mobiles similaires, comprenant les étapes suivantes
a) le rinçage du réfrigérant sous forme liquide d'un cylindre interne dans une station-service (1) par le système de climatisation (2),
b) l'extraction d'un mélange de réfrigérant gazeux et d'huile et/ou de matières particulaires, ayant été rincé du système de climatisation et le passage du mélange dans un accumulateur de rinçage chauffé (14) monté à l'intérieur de la station-service (1),
c) la séparation de l'huile et/ou des matières particulaires du réfrigérant dans l'accumulateur de rinçage chauffé (14) par le compresseur (8) aspirant un réfrigérant gazeux provenant de l'accumulateur de rinçage chauffé (14),
d) la condensation du réfrigérant par refroidissement, et
e) le transfert du réfrigérant liquéfié vers le cylindre interne (4)
**caractérisé en ce que** le système de climatisation agit sur un réfrigérant inflammable et le procédé comprenant en outre le refroidissement du réfrigérant dans un serpentin de chauffage (15) monté dans l'accumulateur de rinçage chauffé (14) et chauffant simultanément le mélange de réfrigérant, d'huile et/ou de matières particulaires présent dans l'accumulateur de rinçage chauffé (14).

2. Procédé selon la revendication 1, **caractérisé en ce que** le réfrigérant liquide entre dans le système de climatisation par un orifice de service (F) relié au côté liquide du système de climatisation (2) et quitte le système de climatisation (2) sous forme gazeuse, incluant toute huile et/ou toutes matières particulaires entraînées, par un orifice de service (E) sur le côté gaz du système de climatisation (2).

3. Procédé selon la revendication 1 ou 2, **caractérisé en ce qu'**il comprend en outre l'étape de vidange d'huile et/ou de matières particulaires de l'accumulateur de rinçage chauffé (14).

4. Procédé selon la revendication 3, **caractérisé en ce que,** l'étape de vidange d'huile et/ou de matières particulaires de l'accumulateur de rinçage chauffé (14) est réalisée pendant l'opération de rinçage.

5. Procédé selon l'une quelconque des revendications 3 et 4, **caractérisé par** la vidange d'huile et/ou de matières particulaires de l'accumulateur de rinçage chauffé (14) par une soupape (16) au moyen d'un temporisateur pour commander l'ouverture et la fermeture de la soupape (16).

6. Procédé selon l'une quelconque des revendications précédentes, **caractérisé en ce qu'**il comprend en outre la séparation de toute huile vers le réfrigérant circulant par son passage par le compresseur (8) avant le refroidissement dans le serpentin de chauffage (15).

7. Système pour remplir, vider et rincer des systèmes de climatisation, tels que des systèmes de climatisation dans des véhicules ou des systèmes de climatisation mobiles similaires, qui agit sur un réfrigérant inflammable, qui comprend une station-service destinée à être couplée au système de climatisation pendant une opération de remplissage, de vidange et/ou de rinçage, dans lequel la station-service (1) comprend un boîtier dans lequel une canalisation (5) pour acheminer le réfrigérant relie un premier orifice (E) avec un compresseur (8), des moyens de refroidissement et un cylindre interne (4) pour stocker le réfrigérant ainsi qu'un second orifice (F), et dans lequel un accumulateur de rinçage chauffé (14) est agencé à l'intérieur de la station-service (1) entre le premier orifice (E) et le compresseur (8) afin de recueillir le réfrigérant, qui est rincé de la station-service (1) et par le système d'A/C (2), et pour chauffer le réfrigérant présent dans l'accumulateur de rinçage chauffé (14) et pour refroidir simultanément le réfrigérant dans le serpentin de chauffage (15) pour condenser le réfrigérant chaud, gazeux ou partiellement liquéfié avant son stockage dans le cylindre interne (4).

8. Système selon la revendication 7, **caractérisé en ce que** le boîtier est étanche aux gaz.

9. Système selon la revendication 7 ou 8, **caractérisé en ce que** l'accumulateur de rinçage chauffé (14) comprend un serpentin de chauffage (15) à travers lequel un réfrigérant gazeux, qui a été chauffé dans le compresseur (8), est destiné à s'écouler.

10. Système selon l'une quelconque des revendications 7 - 9, **caractérisé en ce que** l'accumulateur de rinçage chauffé (14) comprend en outre une soupape (16) montée sur une sortie à travers laquelle une huile et/ou des matières particulaires sont extraites de l'accumulateur de rinçage chauffé (14).

11. Système selon la revendication 7, **caractérisé en ce que** la canalisation (5b) comprend des soupapes (10, 13), qui sont montées entre une sortie sur le cylindre interne (4) et le second orifice (F).

12. Système selon la revendication 11, **caractérisé en ce qu'**une soupape (12) est montée entre le premier orifice (E) et l'accumulateur de rinçage chauffé (14).

13. Système selon la revendication 11 ou 12, **caractérisé en ce que** la sortie du cylindre interne (4) est reliée au premier orifice (E) par l'intermédiaire d'un branchement (5a) de la canalisation, lequel branchement (5a) inclut une soupape (11).

14. Système selon l'une quelconque des revendications 7 - 13, **caractérisé en ce qu'**un séparateur d'huile (9) est monté entre le compresseur (8) et le serpentin de chauffage (15).

15. Système selon l'une quelconque des revendications 7 - 14, **caractérisé en ce qu'**un filtre (7) est monté entre l'accumulateur de rinçage chauffé (14) et le compresseur (8).
